# EUROPÄISCHE PATENTSCHRIFT

(11) **EP 0 829 672 B1**
(45) Veröffentlichungstag und Bekanntmachung des Hinweises auf die Patenterteilung: **29.05.2002**
(21) Anmeldenummer: 97250272.8
(22) Anmeldetag: 16.09.1997
(51) Int. Cl.: F16L 37/46, F16L 37/30, F16L 37/26

(54) **Hochdruck-Schnellkupplung**
High pressure quick connection
Raccord rapide haute pression

(30) Priorität: 16.09.1996 DE 19638949
(43) Veröffentlichungstag der Anmeldung: 18.03.1998
(73) Patentinhaber: Bruchhold, Ingo, Dr., D-10585 Berlin (DE)
(72) Erfinder: Bruchhold, Ingo, Dr., D-10585 Berlin (DE)

(56) Entgegenhaltungen:
- CH-A- 180 143
- CH-A- 304 125
- CH-A- 352 205

## Beschreibung

Die Erfindung betrifft eine Vorrichtung zum Fügen und Lösen von Medium führenden Leitungen mit den Merkmalen des Oberbegriffes des Patentanspruches 1.

Es sind eine Vielzahl von Kupplungen bekannt, die das schnelle Fügen und Lösen von Medium führenden Leitungen ermöglichen. Eine Variante dieser Systeme bestehen im Wesentlichen aus zwei miteinander verbindbaren rohrähnlichen Elementen, an deren Enden jeweils ein Rohr bzw. Schlauch fest und dicht angebracht ist. In mindestens einem der rohrähnlichen Elemente befindet sich ein Kolben, der beispielsweise als Kugel, als Ringkolben oder als Ventilteller gestaltet sein kann. In gelöstem Zustand der Kupplung bei getrennter Leitung wird eine Teilfläche des Kolbens mit dem Druck des zu sperrenden Mediums beaufschlagt. Der Kolben wird dadurch in Richtung einer Öffnung gepreßt, die im verbundenen Zustand der Kupplung als Durchgang für das Medium zum zweiten rohrähnlichen Element dient. Diese Öffnung ist durch den angepreßten Kolben dicht verschlossen. Um die drucklose Leitung mit der druckbeaufschlagten Leitung zu verbinden, müssen die beiden rohrähnlichen Elemente ineinander gesteckt werden. Hierbei muß zunächst eine Fügearbeit verrichtet werden, um Formschlußverbindungen in Funktionsstellung zu bringen. Bei den bekannten Kupplungen sind das Gewindespindeln, Bajonettverschlüsse oder Federenergie speichernde Sperrmechanismen, die in Funktionsstellung beide rohrähnlichen Elemente miteinander formschlüssig verbinden, so daß ein Auseinanderpressen der rohrähnlichen Elemente durch den Mediumdruck ausgeschlossen wird. Weitere Fügearbeit muß dann noch verrichtet werden, um den Kolben im rohrähnlichen Element gegen den Druck des Mediums zu verschieben und den Durchgang für das Medium freizugeben. In einigen Ausführungen werden zusätzlich Mechanismen, wie z.B. Hebel bzw. Handräder mit Gewindespindeln, in die Kupplung als Kraftverstärker integriert, um die Kupplung auch bei hohem Leitungsdruck noch von Hand Fügen zu können.

Eine weitere Variante ist in den Dokumenten CH-A-304 125 und CH-A 352 205 beschriebenen. Bei diesen Systemen werden im gelösten Zustand der Kupplungen die Kanäle der Kupplungshälften durch stopfen- bzw. ringähnliche Kolben verschlossen, die ausschließlich senkrecht zur Strömungsrichtung an der Austrittsöffnung der Kupplungshälften verschoben werden können.

Ein Nachteil der bekannten Kupplungen ist, daß die Kolbenflächen bei der erst genannten Variante in Abhängigkeit vom Betriebsdruck relativ klein ausgeführt werden müssen, um den Fügevorgang noch von Hand durchführen zu können. Entsprechend der kleinen Kolbenfläche ist auch der Leitungsquerschnitt im Durchlaß reduziert. Hierdurch wird die maximale Förderleistung der Leitung beschränkt. Ein weiterer Nachteil ist, daß durch die bei einigen Kupplungen integrierten Kraftverstärker sich der Zeitaufwand für den Füge- und Löseprozeß erhöht.

Die zweit genannte Variante, welche in den Dokumenten CH-A-304 125 und CH-A 352 205 beschriebenen wird, weist den Nachteil auf, dass die Kupplungshälften nicht unter anliegendem Systemdruck gefügt bzw. gelöst werden können, ohne dass das in dem Rohrsystem befindende Medium zwischen die Kupplungshälften gelangt und diese ungewollt auseinander drückt.

Der Erfindung liegt die Aufgabe zugrunde, eine Hochdruck-Schnellkupplung zu schaffen, mit deren Hilfe Leitungen auch unter extrem hohem Betriebsdruck schnell und einfach ohne großen Kraftaufwand von Hand gefügt und gelöst werden können, wobei dieses ohne wesentliche Einschränkung der Förderleistung möglich sein soll.

Diese Aufgabe wird erfindungsgemäß durch die Merkmale des Patentanspruches 1 gelöst. Vorteilhafte Ausgestaltungen der Erfindung sind Gegenstand der Unteransprüche.

Es wird eine Hochdruck- Schnellkupplung zum Fügen und Lösen von Medium führenden Leitungen vorgeschlagen, bei der das eine Ende einer Leitung mit einem Kanal dicht und fest verbunden ist, daß der Kanal senkrecht zur Längsrichtung eines Führungsrohres in den Innenraum des Führungsrohres mündet, bei der das Ende einer anderen Leitung dicht und fest mit einem Kanal verbunden ist, der sich innerhalb eines Stopfens befindet und senkrecht zur Mittelachse des Stopfens durch die zylindrische Mantelfläche des Stopfens tritt. Im gelösten Zustand der Hochdruck-Schnellkupplung befindet sich in dem Führungsrohr ein zylindrischer Stopfen, der dicht und in Längsrichtung eines Führungsrohrs verlagerbar ist. Beim Fügen der Hochdruck-Schnellkupplung wird der eine Stopfen in das Führungsrohr geschoben und verschiebt gleichzeitig den anderen Stopfen in Längsrichtung so weit, bis der eine Kanal mit dem anderen Kanal verbunden ist, wobei dann der Stopfen das Führungsrohr zur Umgebung hin dicht verschließt. Nur die zylindrische Mantelfläche des sich im gelösten Zustand der Hochdruck-Schnellkupplung im Führungsrohr befindliche Stopfen ist gleichmäßig mit Druck beaufschlagt, so daß zum Verschieben dieses Stopfens nur Energie zum Überwinden der Reibkräfte in den Dichtungen zwischen diesem Stopfen und dem Führungsrohr aufgebracht werden muß. Durch formschlüssige Verbindungen zwischen dem einem Stopfen und dem anderen Stopfen wird das Auseinanderdrücken der druckbeaufschlagten Leitung während des Füge- bzw. Lösevorganges, besonders in der Funktionsstellung, wenn das Medium zwischen die Stirnflächen der Stopfen gelangt, verhindert. Ein Sperrmechanismus hält mindestens einen Stopfen im gefügten bzw. gelösten Zustand der Hochdruck-Schnellkupplung in Längsrichtung des Führungsrohrs unverlagerbar. Während des Füge- bzw. Lösevorgangs wird der Sperrmechanismus in solch eine Funktionsstellung gebracht, daß der Stopfen in Längsrichtung des Führungsrohrs verlagerbar ist.

In den Abbildungen 1, 2, 3, und 4 sind für ein Ausführungsbeispiel der Hochdruck-Schnellkupplung die verschiedenen Phasen des Füge- bzw. Lösevorganges dargestellt:
Die Abbildung 1 zeigt den Schnitt durch die gelöste Hochdruck-Schnellkupplung in der Seitenansicht,
die Abbildung 2 zeigt den Schnitt durch die Hochdruck-Schnellkupplung in der Seitenansicht während des Füge- bzw. Lösevorganges,
die Abbildung 3 zeigt den Schnitt durch die Hochdruck-Schnellkupplung in der Seitenansicht im gefügten Zustand und
die Abbildung 4 zeigt die Draufsicht der Hochdruck-Schnellkupplung gemäß der Abbildung 3.

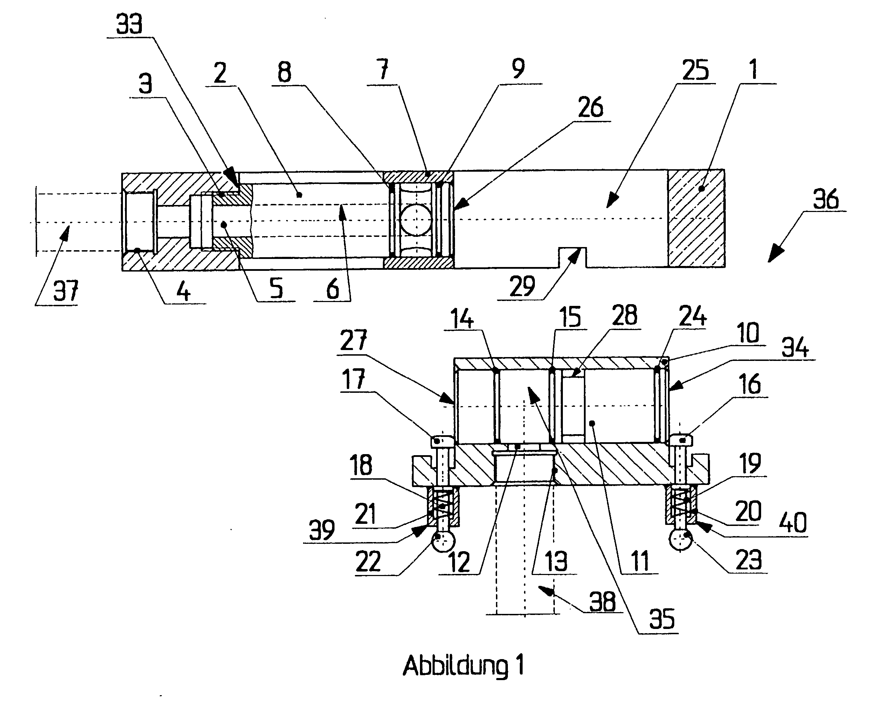

### Legende zu den Abbildungen 1, 2, 3 und 4:

- 1 -: Rahmen
- 2 -: Stopfen
- 3 -: Gewindezapfen
- 4 -: Gewindeanschluß
- 5 -: Kanal
- 6 -: Mantelfläche
- 7 -: Hülse
- 8 -: Dichtung
- 9 -: Dichtung
- 10 -: Führungsrohr
- 11 -: Stopfen
- 12 -: Kanal
- 13 -: Gewindeanschluß
- 14 -: Dichtung
- 15 -: Dichtung
- 16 -: Stift mit Anschlagleiste
- 17 -: Stift mit Anschlagleiste
- 18 -: Feder
- 19 -: Feder
- 20 -: Gehäuse
- 21 -: Gehäuse
- 22 -: Griff
- 23 -: Griff
- 24 -: Dichtung
- 25 -: Öffnung
- 26 -: Stirnseite
- 27 -: Stirnseite
- 28 -: Nut
- 29 -: Aussparung
- 30 -: Zapfen
- 31 -: Bolzen
- 32 -: Feder
- 33 -: Stirnfläche
- 34 -: Stirnfläche
- 35 -: Innenraum
- 36 -: Umgebung
- 37 -: Leitung
- 38 -: Leitung
- 39 -: Sperrmechanismus
- 40 -: Sperrmechanismus

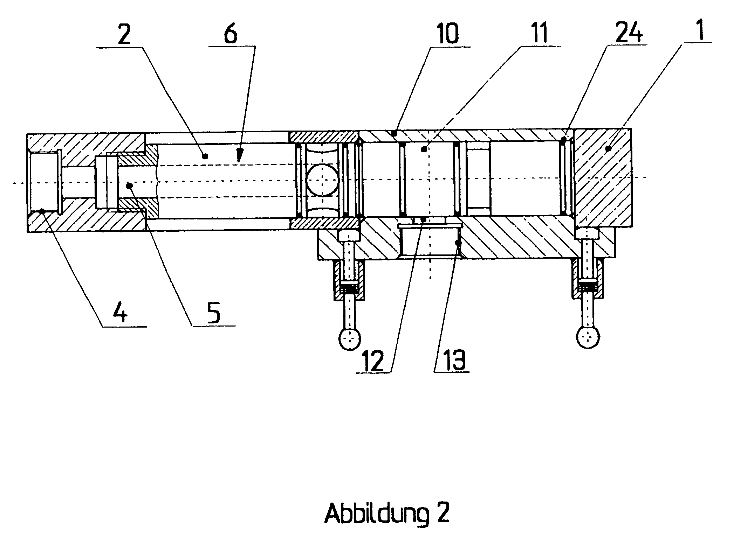

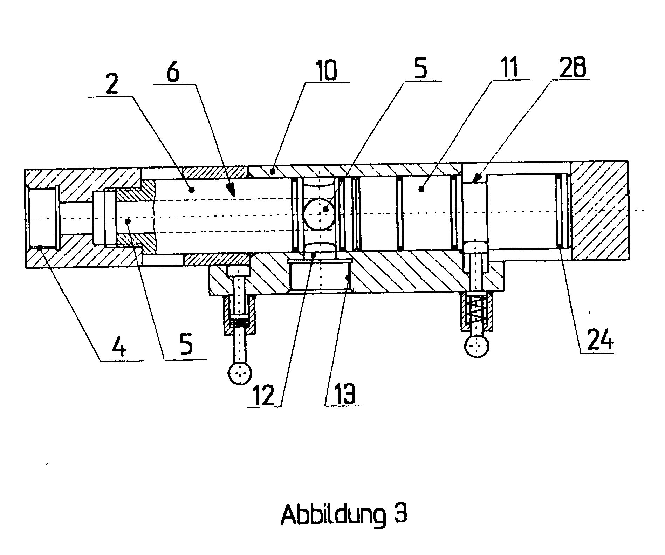

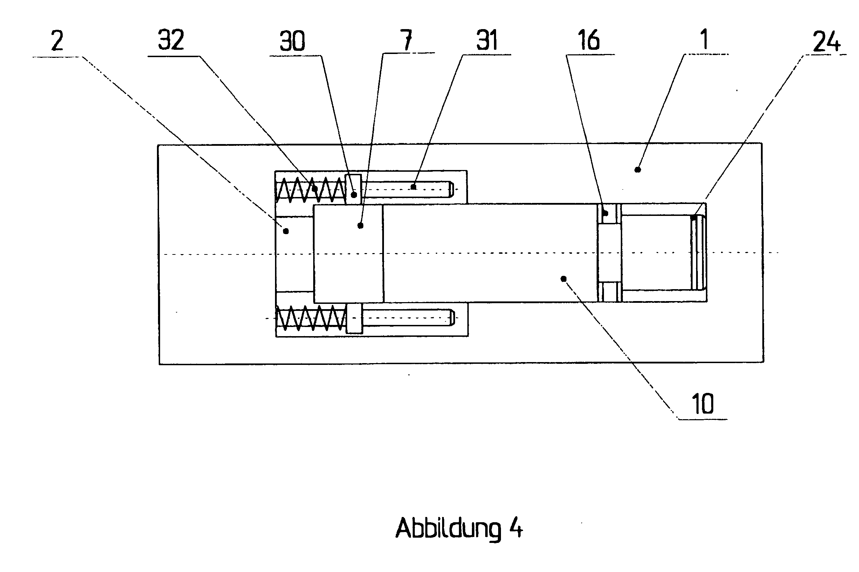

Wie in Abbildung 1 dargestellt, ist in den Rahmen 1 ein erster Stopfen 2 mit Hilfe eines Gewindezapfens 3 fest und dicht verbunden. An der einen Seite des Rahmens 1 befindet sich ein Gewindeanschluß 4, der mit dem im Stopfen 2 integrierten Kanal 5 verbunden ist. Der Kanal 5 tritt Senkrecht zur Längsachse des Stopfens 2 an dessen Mantelfläche 6 aus. Auf den Stopfen 2 ist über die Mantelfläche 6 und über den Kanal 5 ein Hülse 7 geschoben. Innerhalb der Hülse 7 sind Dichtungen 8 und 9 so im Stopfen 2 angeordnet, daß der Kanal 5 im Zusammenspiel mit der Hülse 7 und dem Stopfen 2 dicht verschlossen ist. In dem Führungsrohr 10 ist ein zweiter Stopfen 11 in Längsrichtung des Führungsrohrs 10 verschiebbar gelagert. Senkrecht zur Längsrichtung des Führungsrohr 10 befindet sich ein Kanal 12, der in einen Gewindeanschluß 13 übergeht. Um den zweiten Stopfen 11 sind Dichtungen 14 und 15 so angeordnet, daß im gelösten Zustand der Hochdruck-Schnellkupplung der Kanal 12 dicht verschlossen ist. Ein weiterer Dichtring 24 verhindert das Eindringen von Schmutz zwischen den Stopfen 11 und dem Führungsrohr 10. Im gefügten und gelösten Zustand der Hochdruck-Schnellkupplung ist der Stopfen 11 formschlüssig beidseitig durch Sperrmechanismen 39 und 40, bestehend aus Stiften mit Anschlagleiste 16 und 17, Federn 18 und 19, Gehäusen 20 und 21 und Griffen 22 und 23, gegen das Verschieben in Längsrichtung des Führungsrohrs 10 gesichert. Die Darstellung in Abbildung 2 zeigt die Hochdruck-Schnellkupplung während des Füge- bzw. Lösevorganges. Der Rahmen 1 ist mit seiner Öffnung 25 über das Führungsrohr 10 geschoben. Der Rahmen 1 drückt die Anschlagleisten 16 und 17 gegen die Kraft der Federn 18 und 19 in die Position, bei der sich der Rahmen 1 zusammen mit den beiden Stopfen 11 und 2 in Längsrichtung des Führungsrohres 10 verschieben läßt. Während des Fügevorganges wird der Stopfen 2 mit Hilfe des Rahmens 1 in das Führungsrohr 10 geschoben. Hierbei müssen nur die Reibungskräfte aufgrund der unter Druck verpreßten Dichtungen 8 und 9 überwunden werden, da der Stopfen 11 gleichmäßig an seiner Mantelfläche mit Druck beaufschlagt wird. Der dann gefügte Zustand der Hochdruck-Schnellkupplung ist in der Abbildung 3 ist dargestellt. Der Kanal 5 ist mit dem Kanal 12 verbunden. Die Anschlagleiste 16 greift formschlüssig in eine im Stopfen 11 integrierte Nut 28 ein und macht damit die Stopfen 2 und 11 sowie den Rahmen 1 in Längsrichtung des Führungsrohrs unverlagerbar. Zum Lösen der Hochdruck-Schnellkupplung kann durch Ziehen eines Griffes 23 der Sperrmechanismus 40 entriegelt werden. In der Abbildung 2 und 3 ist zu erkennen, daß eine Hülse 7, die über den Stopfen 2 geschoben ist, im Zusammenspiel mit Dichtringen 8 und 9, den Kanal 5 dicht verschließt. Zusätzlich kann noch eine hier nicht dargestellte Dichtung zwischen der Hülse 7 und dem Führungsrohr 10 vorgesehen werden, wodurch dann beide oder eine der Leitungen 37 und 38 während des Füge- bzw. Lösevorganges der Hochdruck-Schnellkupplung mit Druck beaufschlagt sein könnte, ohne daß das Medium in die Umgebung 36 gelangt. Die in den Abbildungen 1 bis 4 dargestellte Lösung für eine formschlüssige Verbindung zwischen dem Stopfen 2 und 11 bestehend aus einem beide Stopfen 2 und 11 umschließenden Rahmen 1 kann selbstverständlich auch anders gelöst werden. Zwischen den Stopfen 2 und 11 könnten an den Stirnflächen 26 und 27 Formschlußelemente, wie zB. Bajonettverschlüsse oder Schraubverbindungen, integriert sein, die hier nicht dargestellt sind. In der Abbildung 4 ist die Draufsicht der Abbildung 3 gezeigt, wobei eine Feder 32, die auf einen Bolzen 31 geführt wird, dargestellt ist, die sich zwischen der Hülse 7 und dem Rahmen 1 in Längsrichtung des Führungsrohrs abstützt. Hierdurch wird die Hülse 7 immer kraftschlüssig in bestimmten Positionen gehalten.

## Patentansprüche

1. Hochdruck- Schnellkupplung zum Fügen und Lösen von Medium führenden Leitungen bei der das eine verbindbare Ende einer zumindest zeitweise Medium führenden Leitung (38) über den senkrecht zur Längsrichtung eines Führungsrohres (10) angeordneten ersten Kanal (12) in den Innenraum (35) des Führungsrohres (10) mündet, daß das andere verbindbare Ende einer zumindest zeitweise Medium führenden Leitung (37) dicht und fest an der einen Seite eines ersten Stopfens (2) mündet, daß sich innerhalb des zylindrischen Stopfens (2) ein zweiter Kanal (5) befindet und daß der zweite Kanal (5) mit seinem anderen Ende senkrecht zur Mittelachse des Stopfens (2) durch die zylindrische Mantelfläche (6) des Stopfens (2) tritt, daß im gelösten Zustand der HochdruckSchnellkupplung in dem Führungsrohr (10) ein zweiter zylindrischer Stopfen (11) dicht und in Längsrichtung des Führungsrohrs (10) verlagerbar ist, daß beim Fügen der HochdruckSchnellkupplung der erste Stopfen (2) in das Führungsrohr (10) geschoben wird, daß beim Fügen der erste Stopfen (2) den zweiten Stopfen (11) gleichzeitig in Längsrichtung des Führungsrohres (10) so weit verschiebt, daß der erste Kanal (12) mit dem zweiten Kanal (5) verbunden ist und daß der Stopfen (2) das Führungsrohr(10) zur Umgebung (36) hin dicht verschließt,
**dadurch gekennzeichnet, daß** der erste Stopfen (2) mit Hilfe einer formschlüssigen Verbindung zumindest vorübergehend, während des Füge- und Lösevorgangs der Hochdruck-Schnellkupplung, mit dem zweiten Stopfen (11) verbunden ist.

2. Hochdruck-Schnellkupplung gemäß dem Anspruch 1. **dadurch gekennzeichnet, daß** die formschlüssige Verbindung aus einem Rahmen (1) besteht, der den zweiten Stopfen (11) und den ersten Stopfen (2) umschließt, wobei dabei sich beide Stopfen (2 und 11) gemeinsam in Längsrichtung des Führungsrohrs (10) verschieben lassen.

3. Hochdruck-Schnellkupplung gemäß dem Anspruch 1. **dadurch gekennzeichnet, daß** die formschlüssige Verbindung unmittelbar zwischen der Stirnfläche (33) und der Stirnfläche (34) besteht.

4. Hochdruck-Schnellkupplung gemäß dem Anspruch 1. **dadurch gekennzeichnet, daß** der erste Stopfen (2) mit Hilfe einer formschlüssigen Verbindung zumindest vorübergehend mit dem Führungsrohr (10) verbunden ist.

5. Hochdruck-Schnellkupplung gemäß dem Anspruch 1. **dadurch gekennzeichnet, daß** um den ersten Stopfen (2) eine Hülse (7) angeordnet ist und daß sich die Hülse (7) in Längsrichtung des Stopfens (2) verlagern läßt.

6. Hochdruck-Schnellkupplung gemäß dem Anspruch 1. und 5. **dadurch gekennzeichnet, daß** die Hülse (7) vorübergehend den aus der zylindrischen Mantelfläche (6) des ersten Stopfens (2) tretenden zweiten Kanal (5) dicht verschließt.

7. Hochdruck-Schnellkupplung gemäß dem Anspruch 1. **dadurch gekennzeichnet, daß** mindestens ein Sperrmechanismus (39) oder (40) den zweiten Stopfen (11) im gefügten und im gelösten Zustand der Hochdruck-Schnellkupplung am Verlagern in Längsrichtung des Führungsrohrs (10)hindert.

8. Hochdruck-Schnellkupplung gemäß dem Anspruch 1. und 7. **dadurch gekennzeichnet, daß** der Sperrmechanismus (39 und 40) beim Einleiten des Füge- bzw. Lösevorgangs so geschaltet wird, daß der zweite Stopfen (11) in Längsrichtung des Führungsrohrs (10) verlagert werden kann.

9. Hochdruck-Schnellkupplung gemäß dem Anspruch 1., 5. und 6. **dadurch gekennzeichnet, daß** zwischen der Hülse (7) und dem Führungsrohr (10) eine Dichtung angeordnet ist.

10. Hochdruck-Schnellkupplung gemäß dem Anspruch 1. und 5. **dadurch gekennzeichnet, daß** die Hülse (7) kraftschlüssig in bestimmte Positionen zum ersten Stopfen (2) gehalten wird.

11. Hochdruck-Schnellkupplung gemäß dem Anspruch 1. und 10. **dadurch gekennzeichnet, daß** die kraftschlüssige Verbindung mit Hilfe mindestens einer Feder (32) aufrecht erhalten wird.

## Claims

1. High-pressure quick-connect coupling for interconnecting and disconnecting media-conducting lines of tubing, wherein one connectable end of a line (38) which at least temporarily conducts a medium is connected to and communicates with the interior space (35) of a guide tube (10) through a first passage (12) disposed in a direction perpendicular to said guide tube, the other connectable end of a line (37) which at least temporarily conducts a medium terminates fixedly and in a sealed relationship on one side of a first plug (2), said cylindrical plug (2) has a second passage (5) therein, with the other end of said second passage (5) intersecting the cylindrical peripheral surface (6) of plug (2) in a direction perpendicular to the central axis of plug (2), a second cylindrical plug (11) disposed in guide tube (10) is displaceable sealingly in the longitudinal direction of guide tube (10) in the separated condition of said high-pressure quick-connect coupling, and said first plug (2) is pushed into guide tube (10) as the high-pressure quick-connect coupling is being connected, said first plug (2) as said connecting proceeds displacing said second plug (11) in the longitudinal direction of guide tube (10) to an extent such that first passage (12) is connected to second passage (5) and that said plug (2) seals guide tube (10) against the environment (36), **characterized in that**, in the process of coupling and disconnecting the high-pressure quick-connect coupling, first plug (2) is connected with second plug (11) at least temporarily by means of a shape-locked (positive) connection.

2. High-pressure quick-connect coupling as in claim 1, **characterized in that** said shape-locked connection comprises a frame (1) enclosing second plug (11) and first plug (2), whereby both plugs (2 and 11) are jointly displaceable in the longitudinal direction of guide tube (10).

3. High-pressure quick-connect coupling as in claim 1, **characterized in that** said shape-locked connection exists directly between end face (33) and end face (34).

4. High-pressure quick-connect coupling as in claim 1, **characterized in that** first plug (2) is connected with guide tube (10) at least temporarily by means of a shape-locked positive connection.

5. High-pressure quick-connect coupling as in claim 1, **characterized by** a sleeve (7) placed about first plug (2), said sleeve (7) being adapted to be displaced in the longitudinal direction of plug (2).

6. High-pressure quick-connect coupling as in claims 1 and 5, **characterized in that** sleeve (7) temporarily seals the second passage (5) emerging from the cylindrical peripheral surface (6) of first plug (2).

7. High-pressure quick-connect coupling as in claim 1, **characterized in that** at least one locking mechanism (39 or 40) is provided to prevent displacement of second plug (11) in the longitudinal direction of guide tube (10) in the connected and disconnected conditions of said high-pressure quick-connect coupling.

8. High-pressure quick-connect coupling as in claims 1 and 7, **characterized in that**, when the connecting process or the disconnecting process is being initiated, locking mechanism (39 and 40) is actuated in a manner such that second plug (11) can be displaced in the longitudinal direction of guide tube (10).

9. High-pressure quick-connect coupling as in claims 1, 5 and 6, **characterized by** a seal member disposed between sleeve (7) and guide tube (10).

10. High-pressure quick-connect coupling as in clainms 1 and 5, **characterized in that** sleeve (7) is held in certain positions relative to first plug (2) in a force-locked (non-positive) manner.

11. High-pressure quick-connect coupling as in claims 1 and 10, **characterized in that** said force-locked (non-positive) connnection is maintained by means of at least one spring (32).

## Revendications

1. Raccord rapide à haute pression pour le raccordement ou la séparation de conduites de fluide, ayant la propriété qu'un des bouts à raccorder d'une conduite (38) tout au moins temporairement remplie de fluide aboutit, par le premier canal (12) qui est orienté perpendiculairement au sens longitudinal d'un tube conducteur (10) à l'espace intérieur (35) du tube conducteur (10), que l'autre bout à raccorder d'une conduite (37) tout au moins temporairement remplie de fluide aboutit, de façon fixe et étanche, au flanc d'un premier bouchon (2), qu'à l'intérieur du bouchon cylindrique (2) se trouve un deuxième canal (5) et que le deuxième canal (5) traverse avec son autre bout le corps cylindrique (6) du bouchon (2), de façon perpendiculaire à l'axe central du bouchon (2), qu'un deuxième bouchon cylindrique (11) peut être déplacé de façon étanche dans le sens longitudinal du tube conducteur (10), lorsque le raccord rapide à haute pression n'est pas connecté, que le premier bouchon (2) est poussé dans le tube conducteur (10), lorsque le raccord rapide à haute pression est connecté, que le premier bouchon (2) pousse le deuxième bouchon (11) lors du raccordement de telle façon que le premier canal (12) est relié au deuxième canal (5) et que le bouchon (2) scelle hermétiquement le tube conducteur (10) vis-à-vis de l'ambiance, **caractérisé par le fait que** le premier bouchon (2) est relié par crabotage, tout au moins temporairement, pendant la procédure de raccordement et de séparation, au deuxième bouchon (11).

2. Raccord rapide à haute pression suivant la revendication 1, **caractérisé par le fait que** l'assemblage craboté est composé d'un cadre (1) qui enferme le deuxième bouchon (11) et le premier bouchon (2), les deux bouchons (2 et 11) se laissant déplacer ensemble dans le sens longitudinal du tube conducteur (10).

3. Raccord rapide à haute pression suivant la revendication 1, **caractérisé par le fait que** l'assemblage craboté se situe directement entre la face (33) et la face (34).

4. Raccord rapide à haute pression suivant la revendication 1, **caractérisé par le fait que** le premier bouchon (2) est relié, tout au moins temporairement, au tube conducteur (10) par un assemblage craboté.

5. Raccord rapide à haute pression suivant la revendication 1, **caractérisé par le fait qu'**un manchon (7) est disposé autour du premier bouchon (2) et que ce manchon (7) peut être déplacé dans le sens longitudinal du bouchon (2).

6. Raccord rapide à haute pression suivant les revendications 1 et 5, **caractérisé par le fait que** le manchon (7) ferme hermétiquement, de manière temporaire, le deuxième canal (5) ressortant du corps cylindrique (6) du bouchon (2).

7. Raccord rapide à haute pression suivant la revendication 1, **caractérisé par le fait qu'**au moins un mécanisme d'arrêt (39 ou 40) empêche le deuxième bouchon (11), lors du raccordement ou de la séparation, de se déplacer dans le sens longitudinal du tube conducteur (10).

8. Raccord rapide à haute pression suivant les revendications 1 et 7, **caractérisé par le fait que**, lors du raccordement ou de la séparation, le mécanisme d'arrêt (39 et 40) est déclenché de telle manière que le deuxième bouchon (11) peut être déplacé dans le sens longitudinal du tube conducteur (10).

9. Raccord rapide à haute pression suivant les revendications 1 et 7, **caractérisé par le fait qu'**un joint est placé entre le manchon (7) et le tube conducteur (10).

10. Raccord rapide à haute pression suivant les revendications 1 et 5, **caractérisé par le fait que** le manchon (7) est maintenu par adhérence dans des positions déterminées par rapport au premier bouchon (2).

11. Raccord rapide à haute pression suivant les revendications 1 et 10, **caractérisé par le fait que** l'assemblage par adhérence est maintenu par l'intermédiaire d'au moins un ressort (32).
